# EUROPÄISCHE PATENTSCHRIFT

(11) **EP 2 390 168 B1**
(45) Veröffentlichungstag und Bekanntmachung des Hinweises auf die Patenterteilung: **03.09.2014**
(21) Anmeldenummer: 11004298.3
(22) Anmeldetag: 25.05.2011
(51) Int. Cl.: B62D 25/20, B62D 63/02

(54) **Bodenbaugruppe eines Fahrzeugkarrosserieaufbaus**
Floor assembly of a vehicle superstructure
Ensemble de plancher pour carrosserie de véhicule

(30) Priorität: 29.05.2010 DE 102010021995
(43) Veröffentlichungstag der Anmeldung: 30.11.2011
(73) Patentinhaber: Audi AG, 85045 Ingolstadt (DE)
(72) Erfinder: Maier, Hans-Peter, 85283 Wolnzach (DE); Oleff, Nils, 85049 Ingolstadt (DE); Neufeldt, Christian, 74177 Bad Friedrichshall (DE); Thaysen, Oliver, 85055 Ingolstadt (DE)
(74) Vertreter: Engelhardt, Harald

(56) Entgegenhaltungen:
- EP-A2- 1 439 109
- DE-A1-102006 001 484
- DE-A1-102007 001 721
- FR-A1- 2 914 616
- US-A1- 2004 183 340
- US-A1- 2006 061 143

## Beschreibung

Die Erfindung betrifft eine Bodenbaugruppe eines Fahrzeugkarosserieaufbaus nach dem Oberbegriff des Anspruchs 1.

Eine allgemein bekannte gattungsgemäße Bodenbaugruppe eines Fahrzeugkarosserieaufbaus umfasst einen Mittentunnel mit zwei dagegen beabstandeten Seitenschwellern sowie ein Fersenblech. Die unteren Bereiche des Mittentunnels der Seitenschweller und des Fersenblechs sind durch Bodenbleche verbunden, wodurch zu beiden Seiten des Mittentunnels Fußräume gebildet sind. Fahrzeughersteller sind derzeit mit großen Modellpaletten unterschiedlicher Fahrzeugtypen, unterschiedlicher Modellvarianten und unterschiedlicher Fahrzeugausstattungen auf dem Markt. Um eine solche Fahrzeugvielfalt kostenmäßig und logistisch beherrschbar zu machen, werden viele Gleichteile und gleiche Baugruppen verwendet. Insbesondere ist es dazu allgemein bekannt, aus gleichen Bodenbaugruppen hergestellte, sogenannten Plattformen als Basis für unterschiedliche Fahrzeugmodelle zu verwenden.

Beispielsweise ist aus der DE 10 2007 001 721 A1 ein vorderer Karosserieboden für ein Kraftfahrzeug bekannt, dessen Tunnel als Rollprofil ausgebildet ist. Ein vorderes Bodenmodul weist eine Längsverstärkung und zusätzlich eine Verlängerung dieser Längsverstärkung auf.

Weiter ist aus der EP 1 439 109 A2 eine Vörbaustruktur für ein Fahrzeug bekannt, das Außenlängsträger aufweist, die sich in einer Längenrichtung des Fahrzeugs entlang Seitenkanten einer Bodenplatte erstrecken.

Aufgabe der Erfindung ist es, einfach und kostengünstig Variationen und modellspezifische Anpassungen in solchen Bodenbaugruppen selbst zu ermöglichen.

Diese Aufgabe wird dadurch gelöst, dass eine gattungsgemäße Bodenbaugruppe eines Fahrzeugkarosserieaufbaus für eine Längsaussteifung in beiden Fußräumen zwischen dem Mittentunnel und einem Seitenschweller jeweils einen Bodenlängsträger aufweist, der sich von einem vorderen Fußraumbereich bis zum Fersenblech mit einer einem modellangepassten Karosserieaufbau zugeordneten Länge erstreckt. Ein solcher Bodenlängsträger ist jeweils aus zwei Längsträgerteilbereichen zusammengesetzt, nämlich aus einem nichtmodellspezifischen Längsträgerteilbereich, der aus wenigstens einem Längsträgergleichteil gebildet ist, und aus einem modellspezifischen Längsträgerteilbereich, der mit einem Längsträger-Adapterteil gebildet ist. Durch modellspezifisch angepasste, unterschiedliche Adapterlängen ist damit eine einfache Anpassung für modellspezifisch unterschiedlich lange Bodenlängsträger möglich. Insbesondere sind dadurch Anpassungen der Bodenlängsträger von Bodenbaugruppen an Fahrzeugmodelle unterschiedlicher Radstände und/oder Fußraumlängen einfach möglich. Erfindungsgemäß ist der jeweils aus wenigstens einem Gleichteil hergestellte Längsträgerteilbereich vorne mit relativ großer Länge angeordnet und verbindet ein dagegen vergleichsweise kurzes Längsträger-Adapterteil den vorderen Längsträgerteilbereich mit dem Fersenblech. Damit ist vorteilhaft ein großer Längsträgerbereich als Gleichteil herstellbar, wobei diese Länge vorteilhaft so dimensionierbar ist, dass sie auch alleine ohne Adapterteil für bestimmte, relativ kurze Karosserieformen einsetzbar ist. Für längere Karosserien bzw. längere Insassenräume und/oder längere Radstände stehen dann zur Komplettierung der erforderlichen Längsträgerlängen entsprechend längere oder kürzere Längsträger-Adapterteile aus einem Teileset zur Verfügung. Solche relativ kurzen Längsträger-Adapterteile können einfach und kostengünstig hergestellt werden und sind entsprechend einfach zu handhaben und zu montieren.

Für einen durchgehenden Kraftverlauf soll das Längsträger-Hohlprofil des vorderen Längsträgerteilbereichs im Längsträger-Adapterteil weitergeführt werden.

Die Längsträgerhohlprofile des Längsträger-Adapterteils und des übrigen Längsträgerbereichs können in einer konkreten Ausführung unter Mitverwendung von Bodenblech-Längsbereichen und von Schließblechen gebildet werden oder als eigenständige Hohlprofilteile ausgebildet sein.

Zudem kann für eine stabile Anbindung und einen gleichmäßigen Kraftfluss das Adapterteilprofil vorteilhaft in das Fersenblechprofil einlaufen.

Anhand einer Zeichnung wird ein Ausführungsbeispiel der Erfindung dargestellt.

Die einzige Figur zeigt eine perspektivische Ansicht auf einen Teilbereich einer Bodenbaugruppe 2 einer Fahrzeugkarosserie 1 von vorne oben nach schräg hinten im Bereich vor einem Fersenblech 3, wobei die Bodenbaugruppe 2 jeweils Bodenlängsträger 4 aufweist. Zur besseren Verdeutlichung sind die erfindungsgemäß wesentliche Anordnung aus Fersenblech 3 und Bodenlängsträger 4 mit durchgehenden Strichen und die anschließenden Karosserieteile lediglich strichliert gezeichnet.

Die Bodenbaugruppe 2 umfasst einen Mittentunnel 5 und zu beiden Seiten jeweils einen dazu beabstandeten Seitenschwellerbereich 6, 7. Die unteren Bereiche des Mittentunnels 5, der Seitenschwellerbereich 6, 7 und des nach hinten anschließenden Fersenblechs 3 sind jeweils durch Bodenbleche 8, 9 verbunden, wodurch zu beiden Seiten des Mittentunnels 5 jeweils ein Fußraum 10, 11 gebildet ist.

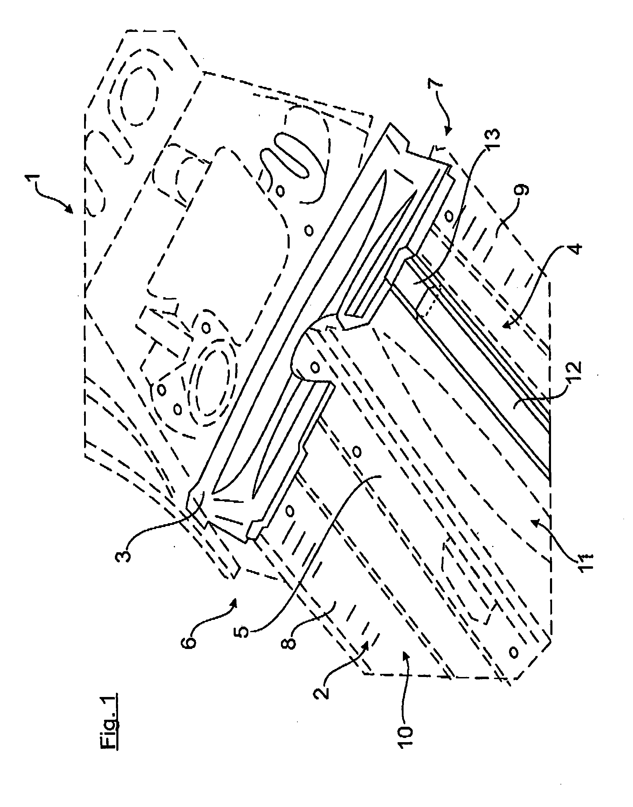

In den Fußräumen 10, 11 zwischen dem Mittentunnel 5 und jeweils einem Seitenschwellerbereich 6, 7 ist ein Bodenlängsträger angeordnet, wobei in Fig. 1 lediglich der linksseitige Bodenlängsträger 4 detailliert dargestellt ist.

Der Bodenlängsträger 4 erstreckt sich von einem vorderen Fußraumbereich bis zum Fersenblech 3, wobei die Länge des Bodenlängsträgers 4 durch den aktuell vorliegenden, einem bestimmten Fahrzeugmodell zugeordneten Karosserieaufbau bestimmt ist.

Der Bodenlängsträger 4 ist zweiteilig zusammengesetzt aus einem vorderen als Gleichteil gebildeten Längsträgerteilbereich 12, der den wesentlichen Längsbereich einnimmt. An dem vorderen Längsträgerteilbereich 12 schließt sich ein dagegen vergleichsweise kurzes Längsträger-Adapterteil 13 zur Komplettierung der gesamten erforderlichen Länge des Bodenlängsträgers 4 an bis zum Anschluss an das Fersenblech 3. Ersichtlich setzt sich das Hohlprofil des vorderen Längsträgerteilbereichs 12 im Längsträger-Adapterteil 13 fort und läuft im Anschlussbereich am Fersenblech 3 in dessen untere Kontur ein.

## Patentansprüche

1. Bodenbaugruppe eines Fahrzeugkarosserieaufbaus
mit einem Mittentunnel (5), mit zwei dagegen beabstandeten Seitenschwellern (6, 7) und mit einem Fersenblech (3), wobei die unteren Bereiche des Mittentunnels (5), der Seitenschweller (6, 7) und des Fersenblechs (3) durch Bodenbleche (8, 9) verbunden sind, wodurch zu beiden Seiten des Mittentunnels (5) Fußräume (10, 11) gebildet sind,
wobei in beiden Fußräumen (10, 11) zwischen dem Mittentunnel (5) und einem Seitenschweller (6, 7) jeweils ein Bodenlängsträger (4) angeordnet ist, der sich jeweils von einem vorderen Fußraumbereich bis zum Fersenblech (3) mit einer einem modellangepassten Karosserieaufbau zugeordneten Länge erstreckt, und
wobei der Bodenlängsträger (4) jeweils aus zwei Längsträgerteilbereichen (12, 13) zusammengesetzt ist, nämlich aus einem nicht modellspezifischen Längsträgerteilbereich (12), der aus wenigstens einem Längsträger-Gleichteil gebildet ist und aus einem modellspezifischen Längsträgerteilbereich, der mit einem Längsträger-Adapterteil (13) gebildet ist, mit dem durch modellspezifisch angepasste, unterschiedliche Adapeterlängen eine Anpassung für modellspezifisch unterschiedlich lange Bodenlängsträger (4) durchführbar ist, **dadurch gekennzeichnet, dass** der jeweils aus wenigstens einem Gleichteil hergestellte Längsträgerteilbereich (12) vorne mit relativ großer Länge angeordnet ist, und dass ein dagegen vergleichsweise kurzes Längsträger-Adapterteil (13) den vorderen Längsträgerteilbereich (12) durchgehend mit dem Fersenblech (3) verbindet.

2. Bodenbaugruppe nach Anspruch 1, **dadurch gekennzeichnet, dass** das Längsträgerhohlprofil des vorderen Längsträgerteilbereichs (12) im Längsträger-Adapterteil (13) weitergeführt ist.

3. Bodenbaugruppe nach Anspruch 1 oder 2, **dadurch gekennzeichnet, dass** die Längsträgerhohlprofile des jeweils aus wenigstens einem Gleichteil hergestellte Längsträgerbereichs (12) und/oder des Längsträger-Adapterteils (13) unter Mitverwendung von Bodenblechlängsbereichen gebildet sind.

4. Bodenbaugruppe nach einem der Ansprüche 1 bis 3, **dadurch gekennzeichnet, dass** das Gleichteil zur Ausbildung des jeweils gleichen Längsträgerbereichs (12) und/oder das Adapterelement zur Ausbildung des modellspezifischen Längsträger-Adapterteils (13) jeweils ein Schließblech und/oder ein Hohlprofilteil sind.

5. Bodenbaugruppe nach einem der Ansprüche 1 bis 4, **dadurch gekennzeichnet, dass** das Adapterteilprofil in das Fersenblechprofil im Anschlussbereich einläuft.

## Claims

1. Floor assembly of a vehicle body superstructure
having a central tunnel (5), having side sills (6, 7) at a spacing therefrom, and having a heelboard (3), the lower areas of the central tunnel (5), the side sills (6, 7) and the heelboard (3) being connected by bottom plates (8, 9), thereby forming foot wells (10, 11) on both sides of the central tunnel (5),
wherein in each of the foot wells (10, 11) between the central tunnel (5) and a side sill (6, 7), a longitudinal bottom chassis beam (4) is arranged which extends in each case from a front foot well area to the heelboard (3) over a length associated with a superstructure adapted to fit a particular model, and
wherein the longitudinal bottom chassis beam (4) is made up in each case of two longitudinal chassis beam portions (12, 13), namely a non-model-specific longitudinal chassis beam portion (12) which is formed from at least one standard part for a longitudinal chassis beam and a model-specific longitudinal chassis beam portion which is formed with a longitudinal chassis beam adapter part (13), by means of which it is possible to adapt to longitudinal chassis beams (4) of different lengths specific to different models by means of different adapter lengths specific to different models,
**characterised in that**
the longitudinal chassis beam portion (12) produced in each case from at least one standard part is arranged at the front, with a relatively long length, and a longitudinal chassis beam adapter part (13) which is relatively short by comparison continuously connects the front portion (12) of the longitudinal chassis beam to the heelboard (3).

2. Floor assembly according to claim 1, **characterised in that** the hollow profile of the front portion (12) of the longitudinal chassis beam is continued in the adapter part (13) of the longitudinal chassis beam.

3. Floor assembly according to claim 1 or 2, **characterised in that** the hollow profiles of the portion (12) of the longitudinal chassis beam produced from at least one standard part and/or of the adapter part (13) of the longitudinal chassis beam are formed with the additional use of longitudinal areas of the floor plate.

4. Floor assembly according to one of claims 1 to 3, **characterised in that** the standard part for forming the standard longitudinal chassis beam portion (12) and/or the adapter element for forming the model-specific adapter part (13) of the longitudinal chassis beam each constitute a closed plate and/or a hollow profile portion.

5. Floor assembly according to one of claims 1 to 4, **characterised in that** the adapter part profile runs into the heelboard profile in the connecting region.

## Revendications

1. Module de fond d'une structure de carrosserie de véhicule
avec un tunnel central (5), avec deux longerons latéraux (6, 7) distants de celui-ci et avec une tôle de talon (3), les zones inférieures du tunnel central (5), des longerons latéraux (6, 7) et de la tôle de talon (3) étant raccordées par des tôles de fond (8, 9), et formant ainsi des espaces pour les pieds (10, 11) des deux côtés du tunnel central (5),
un longeron de fond (4) étant respectivement disposé dans les deux espaces pour les pieds (10, 11) entre le tunnel central (5) et un longeron latéral (6, 7) et s'étendant respectivement à partir d'une zone avant d'espace pour les pieds jusqu'à la tôle de talon (3) suivant une longueur appropriée attribuée à une structure de carrosserie adaptée au modèle,
le longeron de fond (4) étant composé respectivement de deux zones partielles de longeron (12, 13), à savoir d'une zone partielle de longeron (12) non spécifique au modèle qui est formée d'au moins une partie invariante de longeron et d'au moins une zone partielle de longeron spécifique au modèle qui est formée avec un élément adaptateur de longeron (13) avec lequel il est possible, par des longueurs d'adaptation différentes adaptées de façon spécifique au modèle, de réaliser une adaptation pour des longerons de fond (4) de longueur différente de façon spécifique au modèle, **caractérisé en ce que** la zone partielle de longeron (12) fabriquée respectivement à partir d'au moins une partie invariante est disposée à l'avant avec une longueur relativement importante, et **en ce qu'**un élément adaptateur de longeron (13) relativement court par rapport à celle-ci raccorde de façon continue la zone partielle de longeron (12) avant à la tôle de talon (3).

2. Module de fond selon la revendication 1, **caractérisé en ce que** le profilé creux de longeron de la zone partielle de longeron (12) avant se prolonge dans l' élément -adaptateur de longeron (13).

3. Module de fond selon la revendication 1 ou 2, **caractérisé en ce que** les profilés creux de longeron de la zone partielle de longeron (12) fabriquée respectivement à partir d'au moins une partie invariante et/ou de l'élémenrtadaptateur de longeron (13) sont également formés avec une utilisation conjointe de zones longitudinales de tôle de fond.

4. Module de fond selon une des revendications 1 à 3, **caractérisé en ce que** la partie invariante destinée à la constitution de la zone partielle de longeron (12) respectivement identique et/ou l'élément destiné à constituer l'élément adaptateur de longeron (13) spécifique au modèle sont respectivement une tôle de fermeture et/ou une partie de profilé creux.

5. Module de fond selon une des revendications 1 à 4, **caractérisé en ce que** le profilé de partie d'adaptation pénètre dans le profilé de tôle de talon dans la zone de raccordement.
